# EUROPÄISCHE PATENTSCHRIFT

(11) **EP 0 682 762 B1**
(45) Veröffentlichungstag und Bekanntmachung des Hinweises auf die Patenterteilung: **02.04.1997**
(21) Anmeldenummer: 94905077.7
(22) Anmeldetag: 18.01.1994
(51) Int. Cl.: F22G 5/12, B05B 1/30

(54) **EINSPRITZKÜHLER**
INJECTION COOLER
REFROIDISSEUR A INJECTION

(30) Priorität: 03.02.1993 DE 4302974
(43) Veröffentlichungstag der Anmeldung: 22.11.1995
(73) Patentinhaber: Holter Regelarmaturen GmbH & Co. KG, D-33758 Schloss Holte-Stukenbrock (DE)
(72) Erfinder: Zurmühlen, Günter, D-33758 Schloss Holte-Stukenbrock (DE)
(74) Vertreter: Hanewinkel, Lorenz, Dipl.-Phys.
(86) Internationale Anmeldenummer: EP9400113
(87) Internationale Veröffentlichungsnummer: WO9418499

(56) Entgegenhaltungen:
- DE-A- 3 713 726
- DE-B- 1 020 642
- GB-A- 1 592 153
- NL-A- 289 690
- US-A- 4 828 767

## Beschreibung

Die Erfindung betrifft einen Einspritzkühler zur Temperaturregelung von überhitztem Dampf mit einem Gehäuse, welches aus einem Gehäusekopf mit einer Wassereintrittsöffnung und einem Düseneinsteckrohr besteht, und einem endseitig am Düseneinsteckrohr angeordneten Düsenkopf in welchem axial hintereinander angeordnet, wandseitig Düsen eingesetzt sind, wobei gehäuseinnenseitig in einer zwischen der Wassereintrittsöffnung und den Düsen angeordneten hohlzylindrischen Kühlwasserleitung eine axial bewegliche Kolbenstange mit einem düsenseitigen Regelkolben, der die Düsen stellungsabhängig kühlwasserdurchflußsteuernd freigibt oder sperrt, angeordnet ist, wobei der Regelkolben in einer Schließstellung den Düsenkopf eintrittseitig gänzlich abdichtet und in einer Offen-Stellung sämtliche Düsen freigibt, wobei zwischen der Wassereintrittsöffnung und den Düsen an der Kolbenstange mindestens ein koaxialer stromab erweitert geformter Vorabdichtungsdrosselkörper in einem in der Kühlwasserleitung angeordneten Kegelsitz angeordnet ist, der in der Schließstellung der Kolbenstange geschlossen ist und in der Offen-Stellung einen größten ringförmigen Drosselquerschnitt freigibt.

Aus der DE-A-37 13 726 ist derartiger Einspritzkühler bekannt, wobei der Düsenstock mit Abstand von einem Lochmantel umgeben ist, so daß sich in dem Hohlraum zwischen Düsenstock und Mantel der aus dem Düsenstock austretende Kühlwasserstrahl mit dem Treibdampf vermischt und von diesem fein zerstäubt wird.

Weiterhin ist in der GB-A-15 92 153 eine Einspritzkühlvorrichtung mit separatem, an den Einspritzkühler angeschlossenem Doppelventil zur Regelung der Kühlwassermenge offenbart. Das Ventil ist ein Zweistufen-Zweiwegeventil, das erst einen Weg freigibt und weiter geöffnet einen zweiten Weg öffnet. Dies ergibt keine stetige Regelcharakteristik.

Weiterhin ist in einem Prospekt der Narvik Armaturenvertriebsgesellschaft mbH, Erich Müllerstr. 22-24, 4000 Düsseldorf 13, Prospekt-Nr.: VN-A.-T.-Temp-9002/08 ein Einspritzkühler beschrieben, der durch Einspritzen mit durch die Düsen zerstäubtem Wasser in einem Kessel befindlichen oder einer Dampfleitung geführten, überhitzten Dampf abkühlt. Durch eine Hubeinstellung des Regelkolbens, wodurch eine oder mehrere der Düsen freigegeben oder verschlossen werden, ist die laufende Einspritzmenge des Kühlmediums in den Kessel oder die Dampfleitung vorgebbar und somit die Dampftemperatur des abgehenden Dampfes regelbar.

Die Hubbstellung des Regelkolbens ist manuell einstellbar oder hydraulisch oder elektromotorisch, wobei z.B. ein in die Dampfleitung eingesetzter Temperaturfühler entsprechende Signale an ein die Hubbewegungen steuernden Mikroprozessor abgibt, steuerbar oder regelbar.

Die bekannten Einspritzkühler haben den Nachteil, daß die Düsen oft einem bereitgestellten, sehr hohen Speisedruck des Kühlwassers ausgesetzt sind und dadurch relativ schnell verschleißen und zerstört werden.

An den Verwendungsorten sind häufig Druckwasserleitungen mit einem Betriebsdruck von über 100 bar vorhanden. Die bekannten Einspritzkühler werden mit diesem Wasserdruck von teilweise über 100 bar eingesetzt, und der Gegendruck des zu kühlenden Dampfes ist oft wesentlich geringer, so daß der Wasserdruck fast in ganzer Höhe an den jeweils geöffneten Düsen anliegt. Hierdurch werden die Düsen durch die strömungsgeschwindigkeitsbedingte Erosion relativ schnell zerstört. Hierdurch werden neben den erhöhten Reparatur- und Austauschteilkosten kurze, und somit kostenerhöhende, Wartungsintervalle bedingt.

Aufgabe der Erfindung ist es, den eingangs genannten Einspritzkühler dahingehend zu verbessern, daß jeweils unabhängig von der Kühlwasserzufuhrmenge an den einzelnen Düsen ein annähernd gleicher, einerseits eine ausreichende zerstäubung gewährleistender und andererseits die Düsen nicht zerstörender, Wasserdruck anliegt.

Die Aufgabe wird erfindungsgemäß dadurch gelöst, daß der/die Vorabdichtungskörper jeweils eine Vorabdichtungsdrosselkörperlänge aufweist, die mindestens einem Hubspiel des Regelkolbens zwischen der Schließ-Stellung und der Offen-Stellung entspricht und auf der der einen stetig erweiterten Drosselquerschnitt aufweist, und daß der/die Vorabdichtungsdrosselkörper im Gehäusekopf angeordnet ist/sind und in einen Führungssitz, welcher in die Kühlwasserleitung eingeschraubt ist und zum Gehäusekopf mit einem Dichtring abgedichtet ist, eingesetzt ist und daß der Vorabdichtungsdrosselkörper führungssitzaußenseitig einen erweiterten Abdichtkragen hat, welcher in der Schließhubstellung den Führungssitz und mithin die Kühlwasserleitung austrittsseitig zusätzlich abdichtet.

Vorteilhafte Ausgestaltungen des Einspritzkühlers sind Gegenstand der Unteransprüche.

Der erfindungsgemäße Einspritzkühler nutzt vorteilhaft das durch die Steuerung der Düsenabdichtung durch die Steuerkolben vorgegebene Hubspiel des Regelkolbens, um eine Vorabdichtung der Kühlwasserleitung und eine Vorabdruckreduzierung an den jeweils freigegebenen Düsen zu erreichen.

In der Schließstellung des Regelkolbens verschließt zusätzlich zu den die Wasseraustrittsöffnung der Düsen verschließenden Steuerkolben der Vorabdichtungsdrosselkörper, der gewöhnlich ein Drosselkegel ist, die Kühlwasserleitung.

Entsprechend der durch die Hubbewegung des Regelkolbens bedingten Stellung des Steuerkolbens, welcher die Düsenöffnung bestimmt, gibt der Vorabdichtungskolben die Kühlwasserleitung frei, indem stromauf der Düsen jeweils eine der geöffneten Düsenfläche angepaßten Kühlwasserdurchlaßfläche geöffnet ist. Die kegelförmige Gestaltung des Vorabdichtungskolbens bedingt eine zur Hubbewegung proportionale Vergrößerung der Kühlwasserdurchlaßläche.

Die durch die Stellung des Vorabdichtungskegels bestimmte Kühlwasserdurchlaßfläche reduziert den an der Wassereinlaßöffnung anliegenden Druck des Kühlwassers auf ein für die Düsen ausgelegtes Maß und verringert hierdurch errosionbedingten Verschleiß an den Düsen.

In dem neuartigen Einspritzkühler wird somit der Kühlwasserdruck zweistufig abgebaut. In diesem zweistufigen Einspritzkühler findet der erste Druckteilabbau am Vorabdichtungskolben und der zweite Druckteilabbau in den Düsen statt.

Der Vorabdichtungskegel ist vorteilhaft im Gehäusekopf angeordnet. Hierdurch ist bei Verwendung von Düseneinsteckrohren unterschiedlicher Länge jeweils der gleiche Gehäusekopf mit dem Führungssitz in Kombination mit dem jeweiligen Düseneinsteckrohr verwendbar, wodurch die Lager- und Produktionskosten gering gehalten werden.

In der Kühlwasserleitung ist vorteilhaft ein Führungssitz, welcher als Kegelsitz fungiert, eingeschraubt, in welchen der an der Kolbenstange angeordnete Vorabdichtungskegel eingesetzt ist. Durch diese Gestaltung ist eine Verwendung besonders errosionsresistenter Materialen für den Führungssitz möglich. Hierdurch ist kostensparend der Gehäusekopf aus einem anderen, preiswerteren Material fertigbar.

Der eingepreßte Führungssitz ist vorzugsweise zum Gehäusekopf mit einem Dichtring dampfdicht abgedichtet.

Die Vorabdichtungskegellänge entspricht vorteilhaft mindestens dem Hubspiel des Regelkolbens. Hierdurch ist eine Führung des Vorabdichtungskolbens im düsenseitigen Auslaß des Führungssitzes gewährleistet. Der Vorabdichtungskolben zentriert sich bei Schließung des düsenseitigen Auslasses durch seine konische Gestaltung, wodurch ein genauer Verschluß der Kühlwasserleitung in der Schließhubstellung gesichert ist.

Der Vorabdichtungskegel hat vorzugsweise führungssitzaußenseitig einen erweiterten Abdichtkragen, welcher in der Schließhubstellung den Führungssitz und mithin die Kühlwasserleitung austrittsöffnungsseitig zusätzlich abdichtet. Dieser erweiterte Abdichtkragen sichert zum einen einen dampfdichten Verschluß der Kühlwasserleitung in der Schließhubstellung und dient zum anderen als Anschlag für die Schließhubstellung.

Der Vorabdichtungsdrosselkörper ist vorteilhaft konisch oder paraboloidisch gestaltet. Die durch eine Parabel bestimmte Krümmung der konischen Gestaltung des Vorabdichtungskörpers ergibt eine genauere Anpassung der Kühlwasserdurchlaßfläche zur Wasseraustrittsöffnungsfläche unter Berücksichtigung der Strömungs- und Druckverhältnisse.

In einer weiteren Ausführung des Einspritzkühlers, einem dreistufigen Einspritzkühler, ist vorgesehen, zwei Vorabdichtungskegel an dem Regelkolben axial hintereinander anzuordnen. Die beiden Vorabdichtungskegel sind jeweils einem Führungssitz in der Kühlwasserleitung zugeordnet und verschließen in der Schließhubstellung den jeweiligen Führungssitz und mithin die Kühlwasserleitung dampfdicht. Bei öffnender Hubbewegung der Kolbenstange wird jeweils der Führungssitz und somit die Kühlwasserleitung zur Düsenkopfkammer, der Freigabe der Wasseraustrittsöffnungen durch den Steuerkolben angepaßt, geöffnet.

Diese Ausführung des Einspritzkühlers reduziert den an der Wassereintrittsöffnung anliegenden Kühlwasserdruck in zwei zusätzlichen Stufen, so daß der reduzierte Restdruck an den Düsen anliegt. Der Kühlwasserdruck wird an dem ersten Vorabdichtungskegel in einer ersten Stufe gesenkt und am zweiten Vorabdichtungskegel in einer zweiten Stufe gesenkt, wodurch auch ein an der Wassereintrittsöffnung anliegender besonders hoher Kühlwasserdruck zur Dampfabkühlung verwendbar ist, ohne zur Beschädigung der Düsen, welche die dritte Druckabbaustufe bilden, zu führen.

Die beiden hintereinander angeordneten Kegelsitze sind in einem Führungssitz aus strömungsresistenten Material ausgebildet, welcher in die Kühlwasserleitung eingeschraubt ist.

Der Führungssitz mit zwei Kegelsitzen ist zum Gehäusekopf mit einem Dichtring dampfdicht abgedichtet.

Der untere Vorabdichtungskegel hat vorteilhaft führungssitzaußenseitig einen erweiterten Abdichtkragen, welcher in der Schließhubstellung den Führungssitz und mithin die Kühlwasserleitung austrittsseitig zusätzlich abdichtet und als Schließhubstellungsanschlag dient.

Der erfindungsgemäße Einspritzkühler ist auch bei hohem Kühlwasserdruck ohne Beschädigung der Düsen verwendbar, da der/die Vorabdichtungskegel den Wasserdruck vor Erreichen der Düsen auf ein ausreichendes Maß reduzieren.

Bei Verwendung des zweistufigen Einspritzkühlers, d.h. mit nur einem Vorabdichtungskegel, wird beispielsweise ein Kühlwasserdruck von 85 bar durch den erfindungsgemäßen Vorabdichtungskegel um 30 bar reduziert. An den Düsen liegt nach Abzug des Dampfdrucks in der Dampfleitung von z.B. 10 bar, welcher gegen den Kühlwasserdruck wirkt, ein Restdruck von 45 bar an, welcher einerseits die Düsen nicht schädigt, andererseits jedoch hoch genug ist, eine zur Dampfkühlung ausreichende Zerstäubung des Wassers in den Düsen zu bewirken.

Bei Verwendung eines dreistufigen Einspritzkühlers, d.h. mit zwei axial übereinander angeordneten Vorabdichtungskegeln, wird beispielsweise ein Kühlwasserdruck von 115 bar durch den ersten Vorabdichtungskegel um 30 bar und vom weiteren Vorabdichtungskegel ebenfalls um 30 bar reduziert. An den Düsen liegt nach Abzug des Dampfdrucks in der Dampfleitung von z.B. 10 bar, welcher gegen den Kühlwasserdruck wirkt, ein Restdruck von 45 bar an, welcher einerseits die Düsen nicht beschädigt, andererseits jedoch hoch genug ist, eine zur Dampfkühlung ausreichende Zerstäubung in den Düsen zu bewirken.

Die Erfindung wird nachfolgend anhand den Zeichnungen in den Fig. 1 bis Fig. 3 eingehend erläutert.
Fig. 1 zeigt einen Axialschnitt des zweistufigen Einspritzkühlers;
Fig. 2 zeigt einen Axialschnitt des Führungssitzes mit einem Vorabdichtungskegel;
Fig. 3 zeigt einen Axialschnitt des dreistufigen Einspritzkühlers.

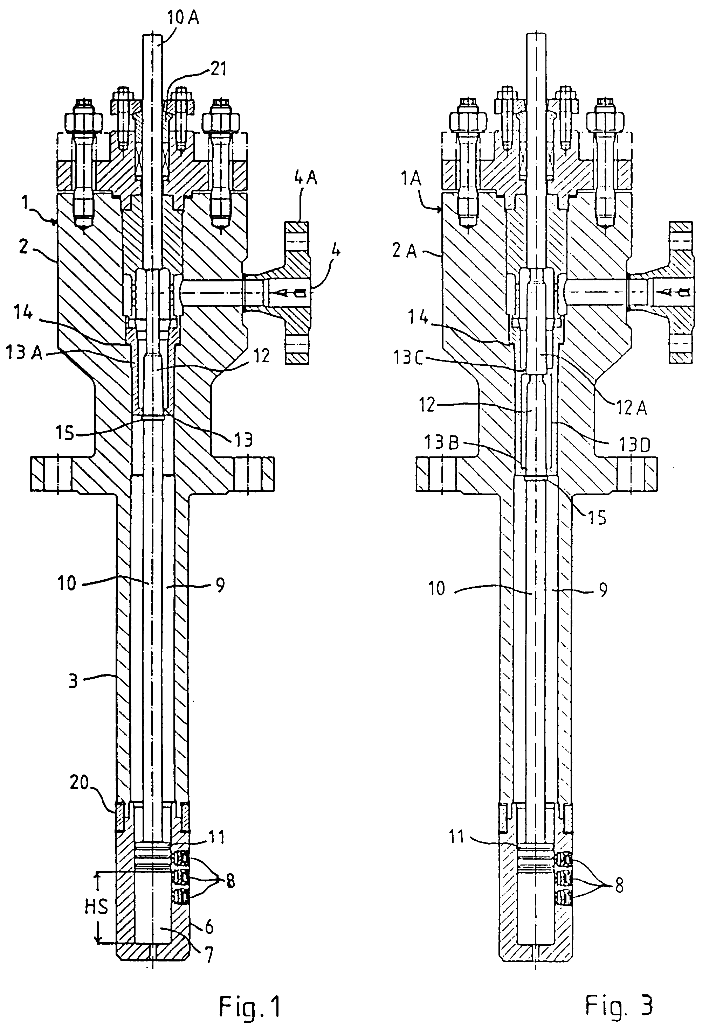

Fig. 1 zeigt einen Axialschnitt des zweistufigen Einspritzkühlers (1).

Der Einspritzkühler (1) hat ein Gehäuse (2, 3), welches aus einem Gehäusekopf (2) mit einer Wassereintrittsöffnung (4) und einem Düseneinsteckrohr (3) besteht. Die Wassereintrittsöffnung (4) ist zur leichten Montage mit einem Vorschweißflansch (4A) versehen.

An dem Düseneinsteckrohr (3) ist endseitig ein Düsenkopf (6) mit einer Düsenkopfkammer (7), in welcher axial hintereinander im Rohr wandseitig Düsen (8), welche die Wasseraustrittsöffnungen (8) enthalten, eingesetzt sind, durch einen Gewindering (20) angeschraubt.

Im Gehäuse (2, 3) des Einspritzkühlers (1) ist in der zwischen der Wassereintrittsöffnung (4) und den Düsen (8) verlaufenden hohlzylindrischen Kühlwasserleitung (9) eine axial bewegliche Kolbenstange (10) mit einem düsenseitigen Steuerkolben (11), welcher die Düsenkopfkammer (7) dampfdicht verschließt, kühlwasserdurchflußsteuernd angeordnet.

Der im Bild oberere Abschnitt (10A) der Kolbenstange (10) ist durch eine Stopfbuchspackung (21) aus dem Gehäusekopf (2) herausgeführt und gehäuseaußenseitig, z.B. elektromotorisch, betätigbar, wodurch die Hubbewegungen des Regelkolbens (11) innerhalb eines Hubspiels (HS) steuerbar sind.

In einer Schließstellung des Regelkolbens (11) verschließen die Kolbenringe die Düsenkopfkammer (7) eintrittseitig gänzlich. Bei austrittgerichteter Hubbewegung des Regelkolbens (11) und mithin der Steuerkolben werden die hintereinander angeordneten Düsen (8) bzw. die Wasseraustrittsöffnungen in einem der Hubbewegung entsprechenden Maße freigegeben oder umgekehrt verschlossen.

An der Kolbenstange (10) ist im Gehäusekopf (2) zwischen der Wassereintrittsöffnung (4) und den Düsen (8) ein gegen die mit einem Strömungspfeil angedeuteten Wasserstromrichtung konisch geformter Vorabdichtungskegel (12) angeordnet.

Der Vorabdichtungskegel (12) ist in einen Führungssitz (13A) mit einem Kegelsitz (13) , welcher in die Kühlwasserleitung (9), zum Gehäusekopf (2) mit einem Dichtring (14) dampfdicht abgedichtet, eingepreßt ist, eingesetzt.

Der Vorabdichtungskegel (12) verschließt in der Schließhubstellung die Kühlwasserleitung (9) dicht und unterstützt so die Abdichtung der Düsen (8) durch den Steuerkolben (11) mit den Kolbenringen.

Bei austrittsseitig gerichteten Hubbewegung der Kolbenstange (10) öffnet der Vorabdichtungskegel (12) die Kühlwasserleitung (9) zur Düsenkopfkammer (7), der Freigabe der Wasseraustrittsöffnung (8) durch den Kolben (11) angepaßt, wodurch eine erste Druckabsenkungsstufe vor den Düsen (8) geschaffen ist, welche einen nahezu konstanten Wasserdruck an den Düsen (8) unabhängig von dem Grad der Düsenfreigebe gewährleistet.

Durch diese Gestaltung hat der Einspritzkühler (1) zwei Druckabsenkungstufen, nämlich die untenseitigen Düsen (8) und den im Gehäusekopf (2) angeordneten Vorabdichtungskegel (12).

Der Vorabdichtungskegel (12) hat führungssitzaußenseitig einen erweiterten Abdichtkragen (15), welcher in der Schließstellung den Führungssitz (13A) und mithin die Kühlwasserleitung (9) austrittseitig zusätzlich abdichtet und darüberhinaus als Schließstellungsanschlag fungiert.

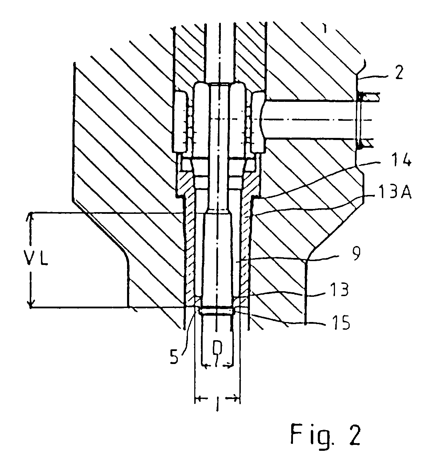

Fig. 2 zeigt einen Axialschnitt des Führungssitzes (13A) mit einem Vorabdichtungskegel (12).

Der Vorabdichtungskegel (12) ist an der Kolbenstange (10) konisch geformt angeordnet.

Der Vorabdichtungskegel (12) ist in einen Führungssitz (13A) mit dem Kegelsitz (13), welcher in die Kühlwasserleitung (9), zum Gehäusekopf (2) mit einenl Dichtring (14) dampfdicht abgedichtet, eingeschraubt ist, eingesetzt. Der Führungssitz (13A) ist im wesentlichen hohlzylindrisch mit einem Innendurchmesser (I), wobei der Kegelsitz (13) einen düsenseitigen Auslaß (5) mit einem verjüngtem Durchmesser (D) hat.

Der Vorabdichtungskegel (12) verschließt in der dargestellten Schließstellung die Kühlwasserleitung (9) dicht.

Der Vorabdichtungskegel (12) hat führungssitzaußenseitig einen erweiterten Abdichtkragen (15), welcher in der Schließstellung den Führungssitz (13A) und mithin die Kühlwasserleitung (9) austrittsseitig zusätzlich abdichtet und darüberhinaus als Schließstellungsanschlag fungiert.

Eine Vorabdichtungskegellänge (VL) entspricht etwa dem in Fig. 1 dargestellten Hubspiel (HS) des Regelkolbens (11).

Der Vorabdichtungskegel (12) ist konisch oder paraboloidisch.

Fig. 3 zeigt einen Axialschnitt des dreistufigen Einspritzkühlers (1A).

Der Einspritzkühler (1A) hat im Unterschied zum zweistufigen Einspritzkühler zwei axial hintereinander angeordnete Vorabdichtungskegel (12, 12A).

Die Vorabdichtungskegel (12, 12A) sind an der Kolbenstange (10), jeweils einem Kegelsitz (13B, 13C) in der Kühlwasserleitung (9) zugeordnet, angeordnet.

In der Schließstellung verschließen die Vorabdichtungskegel (12, 12A) jeweils den Kegelsitz (13B, 13C) und mithin die Kühlwasserleitung (9) dicht.

Bei öffnender Hubbewegung der Kolbenstange (10) werden jeweils die Kegelsitze (13B, 13C) und so die Kühlwasserleitung (9) zur Düsenkopfkammer (7), der Freigabe der Wasseraustrittsöffnung (8) durch den Steuerkolben (11) angepaßt, geöffnet.

Die Kegelsitze (13B, 13C) sind in einem im Gehäusekopf (2A) angeordnetem Führungssitz (13D), welcher in die Kühlwasserleitung (9) eingeschraubt ist, angeordnet.

Der Führungssitz (13D) ist zum Gehäusekopf (2A) mit einem Dichtring (14) dampfdicht abgedichtet.

Der untere Vorabdichtungskegel (12) hat führungssitzaußenseitig einen erweiterten Abdichtkragen (15), welcher in der Schließhubstellung den Führungssitz (13D) und mithin die Kühlwasserleitung (9) austrittsöffnungsseitig zusätzlich abdichtet und zusätzlich als Schließstellunganschlag fungiert.

Es ist möglich, den Konusbereich des Drossel mantelseitig und den zylindrischen Bereich kolbenstangenseitig anzuordnen, wobei ein entsprechender Absatz oder Ring an der Kolbenstange angeordnet ist, der hubstellungsabhängig den jeweils zugehörigen Drosselquerschnitt zu dem Konusmantel freigibt.

Der Kegelsitz (13) und der Führungssitz (13D) können auch in die Kühlwasserleitung (9) eingepreßt sein.

## Patentansprüche

1. Einspritzkühler zur Temperaturregelung von überhitztem Dampf mit einem Gehäuse (2, 3), welches aus einem Gehäusekopf (2) mit einer Wassereintrittsöffnung (4) und einem Düseneinsteckrohr (3) besteht, und einem endseitig am Düseneinsteckrohr (3) angeordneten Düsenkopf (6), in welchem axial hintereinander angeordnet, wandseitig Düsen (8) eingesetzt sind, wobei gehäuseinnenseitig in einer zwischen der Wassereintrittsöffnung (4) und den Düsen (8) angeordneten hohlzylindrischen Kühlwasserleitung (9) eine axial bewegliche Kolbenstange (10) mit einem düsenseitigen Regelkolben (11), der die Düsen (8) stellungsabhängig kühlwasserdurchflußsteuernd freigibt oder sperrt, angeordnet ist, wobei der Regelkolben (11) in einer Schließstellung den Düsenkopf (7) eintrittseitig gänzlich abdichtet und in einer Offen-Stellung sämtliche Düsen (8) freigibt, wobei zwischen der Wassereintrittsöffnung (4) und den Düsen (8) an der Kolbenstange (10) mindestens ein koaxialer stromab erweitert geformter Vorabdichtungsdrosselkörper (12, 12A) in einem in der Kühlwasserleitung (9) angeordneten Kegelsitz (13, 13B, 13C) angeordnet ist, der in der Schließstellung der Kolbenstange (10) geschlossen ist und in der Offen-Stellung einen größten ringförmigen Drosselquerschnitt freigibt,
dadurch gekennzeichnet, daß der/die Vorabdichtungskörper (12, 12A) jeweils eine Vorabdichtungsdrosselkörperlänge (VL) aufweist, die mindestens einem Hubspiel (HS) des Regelkolbens (11) zwischen der Schließstellung und der Offen-Stellung entspricht und auf der er einen stetig erweiterten Drosselquerschnitt aufweist, und daß der/die Vorabdichtungsdrosselkörper (12) im Gehäusekopf (2) angeordnet ist/sind und in einen Führungssitz (13A), welcher in die Kühlwasserleitung (9) eingeschraubt ist und zum Gehäusekopf (2) mit einem Dichtring (14) abgedichtet ist, eingesetzt ist und daß der Vorabdichtungsdrosselkörper (12) führungssitzaußenseitig einen erweiterten Abdichtkragen (15) hat, welcher in der Schließhubszellung den Führungssitz (13A) und mithin die Kühlwasserleitung (9) austrittsseitig zusätzlich abdichtet.

2. Einspritzkühler (1) nach Anspruch 2, dadurch gekennzeichnet, daß der Vorabdichtungsdrosselkörper (12, 12A) konisch oder paraboloidisch gestaltet ist.

3. Einspritzkühler (1A) nach Anspruch 1 oder 2, dadurch gekennzeichnet, daß zwei axial übereinander angeordnete Vorabdichtungsdrosselkörper (12, 12A) an der Kolbenstange (10), welche jeweils einem Sitz (13B, 13C) in der Kühlwasserleitung (9) zugeordnet sind, so daß sie in der Schließstellung jeweils den zugehörigen Sitz (13B, 13C) verschließen und die Sitze (13B, 13C) in einen im Gehäusekopf (2A) angeordnetem Führungssitz (13D) eingesetzt sind, welcher in die Kühlwasserleitung (9) eingepreßt ist und zum Gehäusekopf (2A) mit einem Dichtring (14) abgedichtet ist.

## Claims

1. Injection cooler for the temperature control of superheated steam, having a housing (2, 3), which consists of a housing head (2) with a water inlet aperture (4) and a nozzle insertion tube (3), and a nozzle head (6) disposed on the end of the nozzle insertion tube (3), in which, disposed axially consecutively, nozzles (8) are inserted in the wall, wherein on the housing interior in a hollow-cylindrical cooling water line (9) disposed between the water inlet aperture (4) and the nozzles (8) an axially movable piston rod (10) is provided, having a nozzle-side control piston (11) which frees or blocks the nozzles (8) depending on its position so as to control the through-flow of coolant water, wherein the control piston (11) in a closed position completely seals the nozzle head (7) on the inlet side and in an open position frees all the nozzles (8), wherein between the water inlet aperture (4) and the nozzles (8) at least one coaxial pre-sealing throttle body (12, 12A) formed so as to widen in the downstream direction is disposed in a conical seat (13, 13b, 13c) disposed in the coolant water line (9) and is closed in the closed position of the piston rod (10) and in the open position frees a maximum annular throttle cross-section, characterised in that the pre-sealing body/bodies (12, 12A) has/have a respective pre-sealing throttle body length (VL), which corresponds to at least one stroke play (HS) of the control piston (11) between the closed position and the open position and on which it has a constantly widened throttle cross-section, and in that the pre-sealing throttle body/bodies (12) is/are disposed in the housing head (2) and is inserted into a guide seat (13A) which is screwed into a cooling water line (9) and is sealed with respect to the housing head (2) by a sealing ring (14), and in that the pre-sealing throttle body (12) has on the outside of the guide seat an expanded sealing collar (15), which in the closed stroke position seals the guide seat (13A) and additionally the coolant water line (9) on the outside.

2. Injection cooler (1) according to claim 2, characterised in that the pre-sealing throttle body (12, 12A) is conical or paraboloid in form.

3. Injection cooler (1A) according to claim 1 or 2, characterised in that two pre-sealing throttle bodies (12, 12A) disposed axially one over another [are provided] on the piston rod (10), and are each allocated to a seat (13B, 13C) in the coolant water line (9), so that in the closed position they each close the associated seat (13B, 13C) and the seats (13B, 13C) are inserted into a guide seat (13D), which is disposed in the housing head (2A) and which is squeezed into the coolant water line (9) and is sealed relative to the housing head (2A) with a sealing ring (14).

## Revendications

1. Refroidisseur à injection pour le réglage de la température de vapeur surchauffée, lequel refroidisseur est composé d'un boîtier (2, 3), qui comprend une tête de boîtier (2) avec orifice d'arrivée d'eau (4), et d'un tube injecteur enfichable (3), et d'une tête d'injecteur (6) située à l'extrémité du tube injecteur (3) et équipée de buses (8) disposées axialement les unes derrière les autres, côté paroi, une tige de piston (10), mobile dans un conduit cylindrique, disposé entre l'orifice d'arrivée d'eau (4) et les buses (8), activant un piston de réglage (11) qui, selon sa position, ouvre ou ferme les buses (8), ce piston de réglage (11), en position de fermeture, bouchant hermétiquement la tête d'injecteur (7) côté entrée, et libérant toutes les buses (8) dans une position d'ouverture, la tige de piston (10) étant équipée d'au moins un dispositif d'étranglement d'étanchéification préliminaire (12, 12A) coaxial et s'élargissant en aval, lequel est monté dans une embase conique (13, 13B, 13C) disposée dans le conduit d'eau de refroidissement (9) et est fermé quand la tige de piston (10) est en position de fermeture, tandis qu'il dégage au maximum la section transversale circulaire de la surface d'étranglement lorsqu'il est en position ouverte,
caractérisé en ce que
la longueur (VL) du /de chaque dispositif d'étranglement d'étanchéification préliminaire (12 12A) correspondant au moins à une levée (HS) du piston de réglage (11), c.-à.d. au chemin parcouru entre la position ouverte et la position fermée, la section transversale d'étranglement s'élargissant en continu sur toute cette longueur (VL), et que
le/les dispositif/s d'étranglement d'étanchéification préliminaire (12) est/sont disposé/s dans la tête de boîtier (2) et logé/s dans une embase de guidage (13A) qui est vissée dans le conduit d'eau de refroidissement (9) et pourvue d'une bague d'étanchéité (14) assurant l'étanchéité en direction de la tête de boîtier (2) et que
le dispositif d'étranglement d'étanchéification préliminaire (12) est pourvu, côté embase de guidage, d'un col d'étanchéité élargi (15) qui, en position de fermeture, étanchéifie l'embase de guidage (13A) et, de plus, le conduit d'eau de refroidissement (9) côté sortie.

2. Refroidisseur à injection (1) selon la revendication 1,
caractérisé en ce que
le corps d'étranglement d'étanchéification préliminaire (12, 12A) est de forme conique ou parabolique.

3. Refroidisseur (1A) selon la revendication 1 ou 2,
caractérisé en ce que
la tige de piston (10) est équipée de deux dispositifs d'étranglement d'étanchéification préliminaire (12, 12A) qui sont disposés axialement l'un au-dessus de l'autre et affectés chacun à un logement correspondant (13B, 13C), dans le conduit d'eau (9), de sorte qu'ils ferment chacun, respectivement, le logement afférent (13B, 13C), en position de fermeture, et que
les logements (13B, 13C) sont installés dans une embase de guidage (13D) qui, disposée dans la tête de boîtier (2), est pressée dans le conduit d'eau (9) et pourvue d'une bague d'étanchéité (14) en direction de la tête de boîtier.
